# EUROPEAN PATENT APPLICATION

(11) **EP 2 873 986 A1**
(43) Date of publication of application: **20.05.2015**
(21) Application number: 14172699.2
(22) Date of filing: 17.06.2014
(51) Int. Cl.: G01S 7/481, G01S 17/42, G01S 17/89

(54) **Camera integrated with light source**

(30) Priority: 18.11.2013 KR 20130139773
(71) Applicant: Samsung Electronics Co., Ltd, Gyeonggi-do 443-742 (KR)
(72) Inventor: SEO, Young-kwang, Gyeonggi-do (KR)
(74) Representative: Appleyard Lees

(57) **Abstract**

Disclosed is a camera integrated with a light source, and a method of operating the same. The camera includes: the light source configured to emit light; a scanning mirror configured to scan the light emitted from the light source toward an object; an optical detector configured to detect the light reflected from the object; and a controller configured to transmit a control signal for selectively adjusting a scanning angle of the scanning mirror, and to generate a depth image of the object using the reflected light detected by the optical detector.

## Description

### CROSS-REFERENCE TO RELATED APPLICATION

This application claims priority from Korean Patent Application No. 10-2013-0139773, filed on November 18, 2013 in the Korean Intellectual Property Office, the disclosure of which is incorporated herein by reference in its entirety.

### BACKGROUND

### Field

Apparatuses and methods consistent with exemplary embodiments relate to a camera integrated with a light source, and more particularly, a three-dimensional (3D) depth camera integrated with a light source, which can be miniaturized and allow a user to selectively photograph a desired object.

### Description of the Related Art

In a related art, game consoles, smart phones, smart televisions (TVs), etc., have been provided with a 3D depth camera for motion recognition and visual communication.

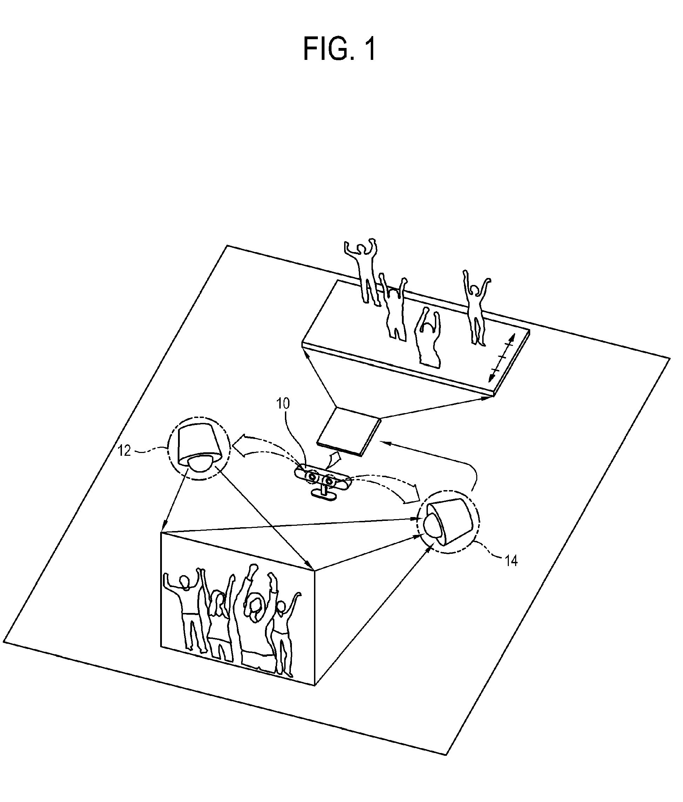

FIG. 1 shows a related art 3D depth camera 10, in which an infrared (IR) light source 12 and an IR receiver 14 are separated from each other. If the infrared light source 12 emits infrared light to an object, the IR receiver 14 receives the infrared light reflected from the object. The camera 10 processes a received infrared image signal and calculates a distance between the camera 10 and the object. The infrared receiver 14 may be a complementary metal oxide semiconductor (CMOS) image sensor or an alternative sensor, having a two dimensional (2D) photo-sensor pixel array.

The 3D depth camera 10 shown in FIG. 1 is problematic due to a bulky size since the IR light source 12 and the IR receiver 12 are separated from each other. Also, the IR receiver 14 includes a CMOS image sensor (CIS) of 2D pixels, and an optical system of lenses, and it is therefore difficult to detect or recognize a small object at a distance of four to five meters from the camera since there are limits to the number of CIS pixels and a field of view (FoV) of the optical lens system.

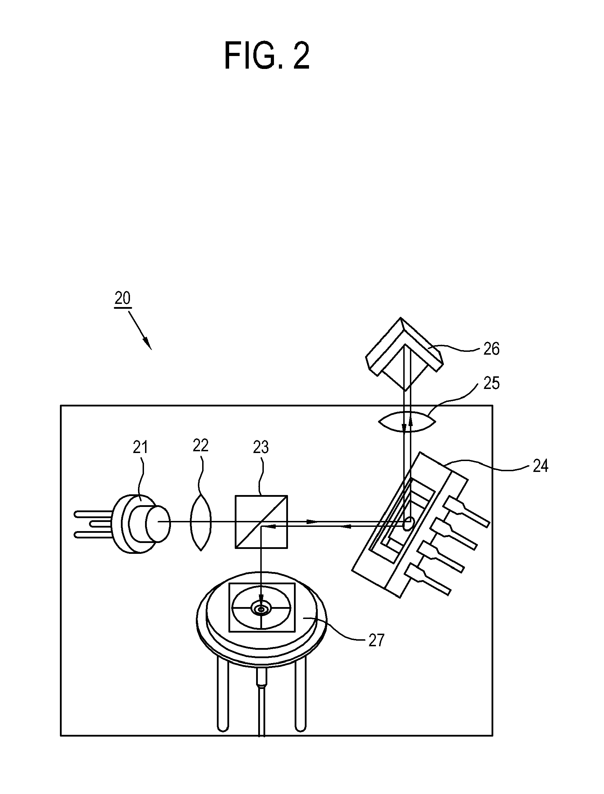

FIG. 2 shows another related art 3D depth camera 20. The 3D depth camera 20 shown in FIG. 2 includes a laser light source 21, a first lens 22, a beam splitter 23, a micro-electromechanical system (MEMS) mirror 24, a second lens 25, and a photo sensor 27. The laser light and the scanned light reflected from an object 26 are sensed by the photo sensor 27 to thereby perform 2D image scanning.

The 3D depth camera 20 shown in FIG. 2 generates the laser light in the form of continuous waves and emits the generated laser light to an object 26 through the MEMS mirror 24. Accordingly, with this configuration, it is not possible to obtain distance information from the camera 20 to the object.

Additionally, with respect to a 3D depth camera emitting infrared light (such as the 3D depth camera 10 shown in FIG. 1), the infrared light spatially spreads in accordance with the FoV, and the spread infrared light is reflected from the object, thereby entering an infrared camera (receiver). The reflected and (intendedly) incident infrared light signal may be affected by external noise of ambient light and cause an error deviation in calculating the depth distance.

### SUMMARY

One or more exemplary embodiments may provide a camera integrated with a light source, which can be miniaturized.

Furthermore, one or more exemplary embodiments may also provide a camera integrated with a light source, in which a user can select and photograph even a small object at a long distance.

Also one or more exemplary embodiments may provide a camera integrated with a light source, which is not affected by external noise of ambient light to prevent an error deviation in calculating a depth distance.

According to an aspect of an exemplary embodiment, there is provided a camera integrated with a light source, the camera including: the light source configured to emit light; a scanning mirror configured to scan the light emitted from the light source toward an object; an optical detector configured to detect the light reflected from the object; and a controller configured to transmit a control signal to the scanning mirror for selectively adjusting a scanning angle of the scanning mirror, and to generate a depth image of the object using the reflected light detected by the optical detector.

The light source may include an infrared laser diode.

The infrared laser diode may emit infrared light having a wavelength of 830 m - 940 nm.

The light source may emit the light of which a pulse width is modulated in sync with the transmitted control signal.

The camera may further include a collimation lens on an optical path between the light source and the scanning mirror to prevent the light emitted from the light source from being scattered.

The optical detector may receive infrared or near-infrared light.

The optical detector may be configured as a single pixel.

The camera may further include an infrared or near-infrared band pass filter on an optical path to the optical detector.

The optical detector may include at least one of a PIN photodiode, an avalanche photo diode (APD), and a phototransistor.

The camera may further include an infrared or near-infrared band light beam splitter configured to direct the light emitted from the light source toward the scanning mirror.

The camera may further include an optical absorption section, wherein the infrared or near-infrared band light beam splitter may be configured to transmit light except infrared or near-infrared light to the optical absorption section which prevents the transmitted light from reflection.

The scanning mirror may include a micro-electromechanical systems (MEMS) mirror of which an angle is adjustable in a two-dimensional (2D) direction.

The scanning mirror may be adjustable, in accordance with the control signal, to scan the light within only a partial range of angles from among a full range of angles of the scanning mirror.

The camera may further include a wide-angle extending lens between the scanning mirror and the object to extend a scanning angle of the scanning mirror.

The wide-angle extending lens may include at least one of acryl, glass and sapphire.

One or more sides of the wide-angle extending lens may include at least one of a optical coating for anti-reflection (AR) and a band pass filter (BPF).

The controller may control a modulation speed, a pulse width, and an optical intensity at pulse width modulation (PWM) for the light source.

The controller may determine a distance between the camera and the object based on a light source PWM signal and an optical signal reflected from the object and returning toward the optical detector.

The controller may use time-to-digital conversion to determine the distance.

The controller may convert a depth distance calculated according to scanning sequences into a 2D image format for one frame image.

The controller may transmit the converted frame image to a gesture recognition engine or a host through a parallel data interface or a serial data interface of the controller.

The camera may further include a color image sensor.

The color image sensor may receive light through a wave-dependent splitter.

The wave-dependent splitter may include at least one of a dichroic mirror, an optically coated beam splitter, and a prism lens.

The wave-dependent splitter may refract visible RGB light and transmits infrared and near-infrared light.

The wave-dependent splitter may transmit visible RGB light and refracts infrared and near-infrared light.

The wave-dependent splitter and the wide-angle extending lens for extending a scanning angle may align an optical axis for both the RGB image and the depth image.

According to an aspect of another exemplary embodiment, there is provided a method of operating a camera integrated with a light source, the method including: emitting, by the light source, light; scanning, by a scanning mirror of the camera, the emitted light toward an object; detecting, by an optical detector of the camera, the light reflected from the object; and generating a depth image of the object using the detected light, wherein the scanning comprises selectively adjusting a scanning angle of the scanning mirror.

According to an aspect of another exemplary embodiment, there is provided a method of operating a camera integrated with a light source, the method including: transmitting a first control signal to control the light source to emit light; transmitting a second control signal to selectively adjust a scanning angle of a scanning mirror that scans the light emitted from the light source toward an object; and generating a depth image of the object using detected light reflected from the object.

### BRIEF DESCRIPTION OF THE DRAWINGS

The above and/or other aspects will become apparent and more readily appreciated from the following description of exemplary embodiments, taken in conjunction with the accompanying drawings, in which:

FIG. 1 schematically shows a related art 3D depth camera;

FIG. 2 schematically shows another related art 3D depth camera;

FIG. 3 shows a camera integrated with a light source according to an exemplary embodiment;

FIG. 4 shows a method of calculating a distance based on pulses of light emitted from a light source and light received in a reflective light receiver, according to an exemplary embodiment;

FIG. 5 shows a scanning example using an infrared pulse rate of 20 Mhz with regard to a stream having a resolution of 640x480 and a depth of 30 frames per second (FPS);

FIG. 6 shows a scanning example for full field of view (FoV) in the camera integrated with the light source according to an exemplary embodiment;

FIG. 7 shows an example of local and detailed scanning for a region of interest (ROI) within the FoV in the camera integrated with the light source according to an exemplary embodiment;

FIG. 8 shows a color image sensor included in the camera integrated with the light source according to an exemplary embodiment; and

FIG. 9 is a view showing a light transmittance characteristic of a wave-dependent splitter.

### DETAILED DESCRIPTION OF EXEMPLARY EMBODIMENTS

Below, exemplary embodiments will be described in detail with reference to accompanying drawings. The following exemplary embodiments describe configurations directly related to the present inventive concept, and the descriptions of other configurations may be omitted. However, it will be understood that the omitted configurations are not unnecessary in realizing an apparatus or system to which the present inventive concept is applied. Further, like numerals refer to like elements throughout. Hereinafter, expressions such as "at least one of," when preceding a list of elements, modify the entire list of elements and do not modify the individual elements of the list.

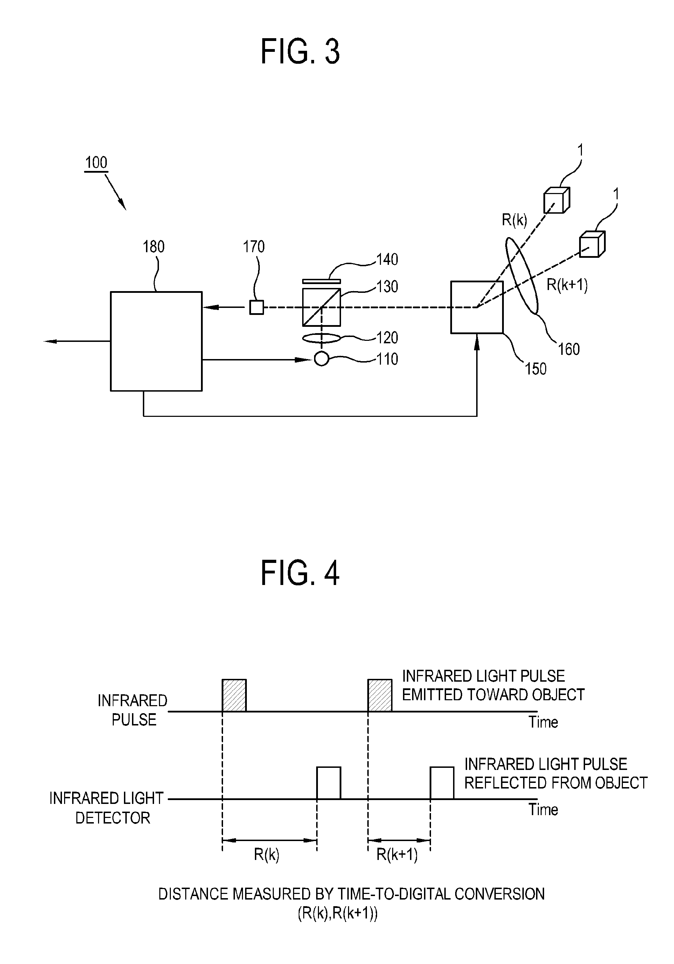

FIG. 3 shows a camera 100 integrated with a light source according to an exemplary embodiment.

As shown in FIG. 3, the camera 100 integrated with the light source includes a light source 110, a collimation lens 120, a beam splitter 130, an optical absorption section 140, a scanning mirror 150, a wide-angle extending lens 160, an optical detector 170, and a controller 180.

The light source 110 may use a single mode laser diode which can emit light having a near-infrared (NIR) band, for example, 830 nm ∼ 940 nm. As shown in FIG. 3, the collimation lens 120 is placed in front of the light source 110 and collimates light emitted from the light source 110. At this time, an optical diffuser for diffusing the light is not used. According to an exemplary embodiment, the light source 110 does not perform a continuous waveform operation, but performs pulse width modulation by the controller 180. Accordingly, the light according to an exemplary embodiment is emitted to and reflected from an object 1 without diffusion, and minimally affected by external noise of ambient light.

The collimation lens 120 is placed in front of the light source 110 and collimates the light emitted from the light source 110.

The beam splitter 130 is placed in front of the collimation lens 120 and splits infrared or near-infrared light from incident light toward the scanning mirror 150. At this time, light of the incident light other than the infrared or near-infrared light from the collimation lens 120 passes through the beam splitter 130 to the optical absorption section 140. Because the transmitted light may cause reflection, the optical absorption section 140 is placed at an opposite side to the light-incident side of the beam splitter 130. The beam splitter 130 transmits or passes the light reflected and returning from the scanning mirror 150 toward the optical detector 170. Thus, the beam splitter 130 serves as an infrared/near-infrared optical band pass filter through, for example, surface coating.

The scanning mirror 150 may employ a micro-electromechanical system (MEMS) two-dimensional (2D) scanning mirror. The scanning mirror 150 in synchronized with an electric X-Y control signal of the controller 180 and causes the light to travel from the light source 110 to a desired 2D direction. Also, the scanning mirror 150 reflects the light incident at a specific angle toward an object 1, and returns the light reflected from the object 1 toward the beam splitter 130.

The wide-angle extending lens 160 serves to widen the incident direction and angle of the light output from the scanning mirror 150. It is understood that one or more other exemplary embodiments may not implement a wide-angle extending lens 160. For example, if the angle of the scanning mirror 150 is sufficiently large, the wide-angle extending lens 160 may be replaced by a plate that can transmit the infrared band light. The wide-angle extending lens 160 may include acryl, glass, sapphire, etc. Furthermore, optical coating for anti-reflection (AR) or a band pass filter (BPF) may be applied to a single side or both sides of the wide-angle extending lens 160.

The optical detector 170 receives the light reflected from the object 1 and returning through the scanning mirror 150 and the beam splitter 130. The optical detector 170 receives near-infrared or infrared band light. The optical detector 170 may be achieved by a single pixel or photo-detector according to an exemplary embodiment, as opposed to a sensor including 2D pixels for the 3D depth camera. In some exemplary embodiments, an infrared/near-infrared band pass filter may be included in the optical detector 170 and cut off external noise of ambient light. The optical detector 170 may include a PIN photodiode, an avalanche photo diode (APD), a phototransistor, etc.

The controller 180 is configured to drive the light source 110 and to control a modulation speed, a pulse width, an optical pulse intensity, etc., when modulating the optical pulse width of the light source 110. The controller 180 controls the angle of the scanning mirror 150 in sync with the pulse width modulation of the light source 110, thereby controlling the angle at which the light is emitted in a 2D space. The controller 180 controls operations of the optical detector 170 that receives light reflected and returning from an object 1.

The controller 180 calculates a distance range between the camera 100 and an object 1 based on a PWM signal of the light source 110 and an optical signal returning from the optical detector 170. At this time, the controller 180 may perform distance calculation through time-to-digital conversion. The controller 180 may convert a depth distance calculated according to scanning sequences into a 2D image format for one frame image. The controller 180 transmits the converted depth frame image to a gesture recognition engine or host through a parallel or serial data interface.

Below, operations of a dynamic range finder will be described with reference to FIGS. 3 and 4.

At a first operation, the controller 180 modulates the light emitted from the light source 110 in accordance with preset PWM conditions, for example, a modulation speed, a duty cycle, a driving current control, etc. According to an exemplary embodiment, a short impulse may be used, although it is understood that one or more other exemplary embodiments are not limited thereto. For example, according to another exemplary embodiment, a general PWM having a duty cycle of about 50% may be used.

At a second operation, the light emitted from the light source 110 is split by the beam splitter 130 so that about half the light travels toward the scanning mirror 150 and the remaining light travels toward the optical absorption section 140.

At a third operation, the light split toward the scanning mirror 150 by the beam splitter 130 is refracted to a 2D space of X-Y axes in accordance with the angles of the scanning mirror 150.

At a fourth operation, the angle of the scanning mirror 150 is controlled by a control signal level corresponding to the X-Y axes of the mirror 150 applied from the controller 180.

At a fifth operation, the angle of the light refracted by the scanning mirror 150 is extended in accordance with a target FoV by the wide-angle extending lens 160. Here, the angle is extended in a case, for example, where the mirror scanning angle is relatively small. However, according to one or more other exemplary embodiments, for example, where the mirror angle is proper to the FoV, the wide-angle extending lens 160 may be replaced by a plate.

At a sixth operation, the controller 180 determines a level of an (X, Y) control signal to be applied to the mirror, based on information such as a refraction angle of the scanning mirror 150 and a refraction angle of the wide-angle extending lens 160.

At a seventh operation, light source pulses are sequentially emitted through the scanning mirror 150, and the sequentially emitted light is reflected from an object 1 and enters the optical detector 170. That is, the light reflected from the object 1 is received in the optical detector 170 via the wide-angle extending lens 160, the scanning mirror 150, and the beam splitter 130 in sequence.

At an eighth operation, the controller 180 converts the incident optical pulses reflected and returning from the object 1 into an electric signal, and performs level normalization.

At a ninth operation, the controller 180 calculates depth data R (k), R(k+1), ... corresponding to the 2D angle by applying time-to-digital conversion to a time difference between an optical PWM edge and a received optical pulse edge reflected and returning from the object.

At a tenth operation, the controller 180 obtains spherical coordinates based on the distance R(k), R(k+1), ... between the camera and the object calculated in the ninth operation, and transforms the obtained spherical coordinates into X-Y Cartesian coordinates. For example, R (k) may be transformed into D (X (i), Y (j)).

At an eleventh operation, the controller 180 may performing mapping of a mirror scanning angle (θ, f) to a depth image X-Y Cartesian coordinates D(X, Y). At this time, the mapping may be predetermined in the controller 180 and may undergo calibration.

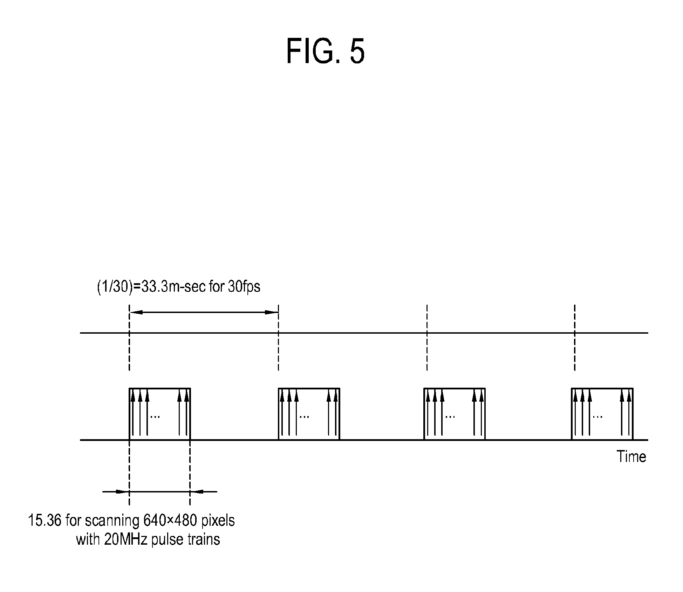

According to an exemplary embodiment, if a light source PWM speed is 20 MHz, a maximum detectable depth distance is about 7.5 meters. As shown in FIG. 5, if a stream has a resolution of 640 x 480 and a depth of 30 frames per second (FPS), a light source pulse rate may be achieved by 20 MHz. In a related art, the image resolution is determined by a pixel arrangement of a CIS, whereas a depth image resolution according to an exemplary embodiment is set up by a user in accordance with applications because the mirror scanning angle and the depth data coordinates can be individually mapped.

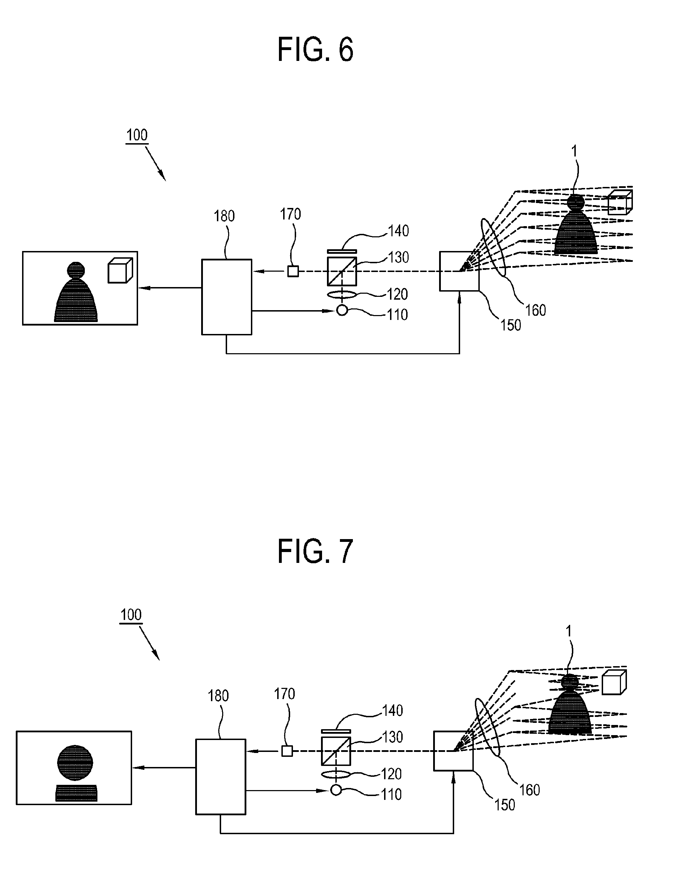

FIG. 6 shows overall object scanning within the full field of view (FoV) by a supportable angle (θ, f) of the scanning mirror and a refraction angle of the wide-angle extending lens in the camera 100 integrated with the light source according to an exemplary embodiment.

FIG. 7 shows local and detailed scanning for a region of interest (ROI) within the full field of view (FoV) by a supportable angle (θ, f) of the scanning mirror and a refraction angle of the wide-angle extending lens in the camera 100 integrated with the light source according to an exemplary embodiment.

As shown in FIG. 7, if a human face is the ROI within the full FoV, it is possible to locally scan only the corresponding ROI. FIG. 6 shows that surroundings together with a human are scanned, whereas FIG. 7 shows that a human face may be locally zoomed in and largely viewed and the regions outside the ROI are not scanned. Thus, according to an exemplary embodiment, the scanning mirror 150 is adjustable, in accordance with a control signal from the controller 180, to scan the light within only a partial range of angles from among a full range of angles of the scanning mirror 150.

In a related art 3D depth camera, the field of view (FoV) for emitting the light is fixed in accordance with specifications of a diffuser. If the specifications of the CIS and the lens are determined, the FoV of the light receiver is fixed. Therefore, the related art 3D depth camera cannot detect a small object at a long distance after the specifications of the IR light source and the FoV of the IR receiver are determined for detecting a small object at a short distance. On the other hand, if the specifications of the IR light source and the FoV of the IR receiver are determined for detecting a small object at a long distance, the FoV is narrow at a short distance

However, in the camera 100 integrated with the light source according to an exemplary embodiment, a local FoV and a full FoV can be dynamically controlled and adjusted.

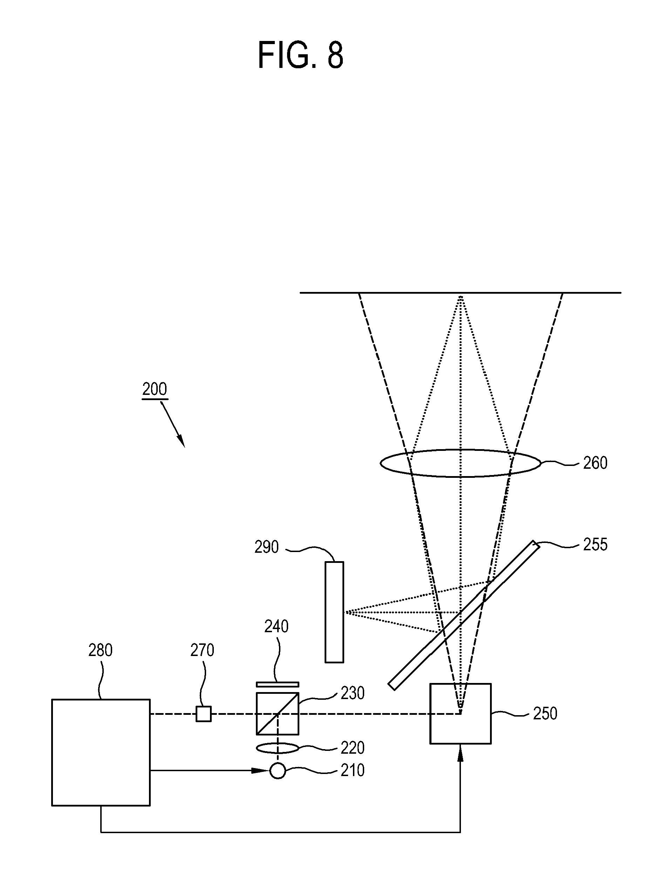

FIG. 8 shows a camera 200 integrated with a light source according to another exemplary embodiment, which further include a wave-dependent splitter 255 and an RGB image sensor 290 in addition to a light source 210, a collimation lens 220, a beam splitter 230, an optical absorption section 240, a scanning mirror 250, a wide-angle extending lens 260, an optical detector 270, and a controller 280.

The wave-dependent splitter 255 may employ a dichroic mirror. The wave-dependent splitter 255 is used as an optical filter for splitting the light into RGB light and the infrared/near-infrared light. In FIG. 8, the wave-dependent splitter 255 reflects the RGB light to enter an RGB image sensor 290, and transmits the infrared/near-infrared light to travel toward a scanning mirror 250.

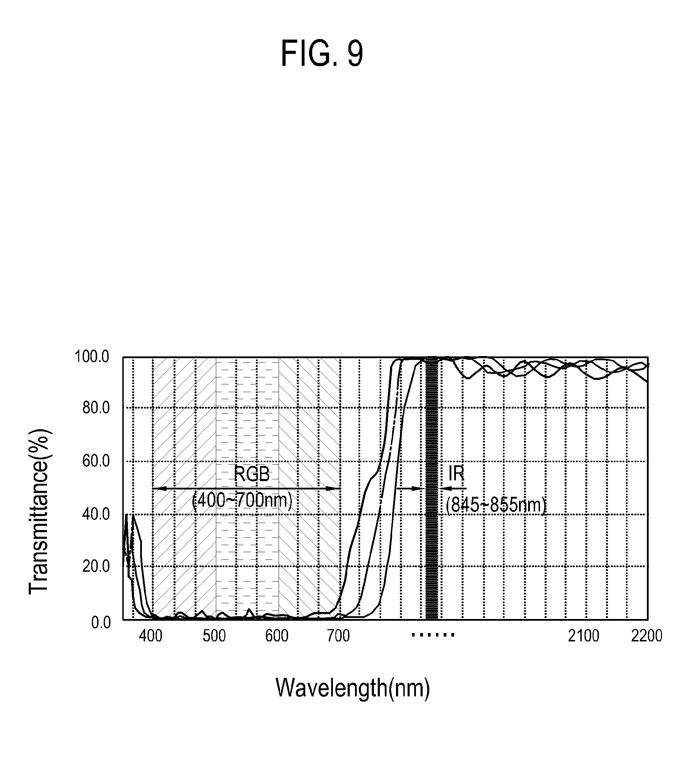

The wave-dependent splitter 255 may employ a beam splitter, a prism lens, etc., coated with optical filters to have characteristics of transmitting spectrums of light as shown in FIG. 9. Referring to FIG. 9, the wave-dependent splitter 255 reflects visible wavelengths of 400-700nm and transmits infrared wavelengths of 845-855nm.

Thus, the wave-dependent splitter 255 shows different transmittance characteristics in accordance with the wavelengths of the incident light. In FIG. 8, the wave-dependent splitter 255 reflects the RGB light and refracts the RGB light at an angle of 90 degrees, and transmits the infrared/near-infrared band light, although it is understood that one or more other exemplary embodiments are not limited thereto. For example, according to another exemplary embodiment, the wave-dependent splitter 255 may be configured to transmit the RGB light, and reflect the infrared/near-infrared band light and refract the infrared/near-infrared band light.

Because a related 3D depth camera is spatially distant from an RGB image sensor module and therefore an RGB image and a depth image are different in an optical axis from each other, pixel registration is separately needed between the RGB image and the depth image.

On the other hand, as shown in FIG. 9, the camera 200 integrated with the light source according to an exemplary embodiment advantageously does not have to perform complicated pixel registration because the splitter 255 and the wide-angle extending lens 260 are shared between the RGB image and the depth image and thus have the same optical axis.

As described above, a camera integrated with a light source according to an exemplary embodiment can be miniaturized since a diffuser and a CIS are not used and an infrared laser diode and a photo detector are integrated with each other.

According to an exemplary embodiment, the camera integrated with the light source can recognize a small object at a long distance and dynamically control the FoV.

Furthermore, according to an exemplary embodiment, the camera integrated with the light source can be minimally affected by external noise of ambient light due to local scanning.

Also, according to an exemplary embodiment, the camera integrated with the light source employs the infrared light source that is not diffused in time order according to coordinates of individual depth data, and thus the intensity of the infrared light is high as compared with external light noise.

While not restricted thereto, an exemplary embodiment can be embodied as computer-readable code on a computer-readable recording medium. For example, a method of operating a camera as described above may be performed by executing instructions recorded on a computer-readable recording medium according to an exemplary embodiment. The computer-readable recording medium is any data storage device that can store data that can be thereafter read by a computer system. Examples of the computer-readable recording medium include read-only memory (ROM), random-access memory (RAM), CD-ROMs, magnetic tapes, floppy disks, and optical data storage devices. The computer-readable recording medium can also be distributed over network-coupled computer systems so that the computer-readable code is stored and executed in a distributed fashion. Also, an exemplary embodiment may be written as a computer program transmitted over a computer-readable transmission medium, such as a carrier wave, and received and implemented in general-use or special-purpose digital computers that execute the programs. Moreover, it is understood that in exemplary embodiments, the controller 180 can include circuitry, a processor, a microprocessor, etc., and may execute a computer program stored in a computer-readable medium.

Although a few exemplary embodiments have been shown and described, it will be appreciated by those skilled in the art that changes may be made in these exemplary embodiments without departing from the principles and spirit of the present inventive concept. Therefore, the foregoing is to be considered as illustrative only. The scope of the invention is defined in the appended claims and their equivalents. Accordingly, all suitable modification and equivalents may fall within the scope of the invention.

## Claims

1. A camera integrated with a light source, the camera comprising:
the light source configured to emit light;
a scanning mirror configured to scan the light emitted from the light source toward an object;
an optical detector configured to detect the light reflected from the object; and
a controller configured to transmit a control signal to the scanning mirror for selectively adjusting a scanning angle of the scanning mirror, and to generate a depth image of the object using the reflected light detected by the optical detector.

2. The camera according to claim 1, wherein the light source emits the light of which a pulse width is modulated in sync with the transmitted control signal.

3. The camera according to claim 1, further comprising a collimation lens on an optical path between the light source and the scanning mirror to prevent the light emitted from the light source from being scattered.

4. The camera according to claim 1, further comprising an infrared or near-infrared band light beam splitter configured to direct the light emitted from the light source toward the scanning mirror.

5. The camera according to claim 4, further comprising an optical absorption section,
wherein the infrared or near-infrared band light beam splitter is configured to transmit light except infrared or near-infrared light to the optical absorption section which prevents the transmitted light from reflection, and
wherein the infrared or near-infrared band light band beam splitter is configured to direct the infrared or near-infrared light toward the scanning mirror.

6. The camera according to claim 1, wherein the scanning mirror comprises a micro-electromechanical systems (MEMS) mirror of which an angle is adjustable in a two-dimensional (2D) direction.

7. The camera according to claim 1, wherein the scanning mirror is adjustable, in accordance with the control signal, to scan the light within only a partial range of angles from among a full range of angles of the scanning mirror.

8. The camera according to claim 1, further comprising a wide-angle extending lens between the scanning mirror and the object to extend a scanning angle of the scanning mirror.

9. The camera according to claim 8, wherein the wide-angle extending lens comprises at least one of acryl, glass, and sapphire.

10. The camera according to claim 1, wherein the controller is configured to determine a distance between the camera and the object based on a light source PWM signal and an optical signal reflected from the object and returning toward the optical detector.

11. The camera according to claim 10, wherein the controller is configured to use time-to-digital conversion to determine the distance.

12. The camera according to claim 10, wherein the controller is configured to convert a depth distance calculated according to scanning sequences into a 2D image format for one frame image.

13. A method of operating a camera integrated with a light source, the method comprising:
emitting, by the light source, light;
scanning, by a scanning mirror of the camera, the emitted light toward an object;
detecting, by an optical detector of the camera, the light reflected from the object; and
generating a depth image of the object using the detected light,
wherein the scanning comprises selectively adjusting a scanning angle of the scanning mirror.

14. A method of operating a camera integrated with a light source, the method comprising:
transmitting a first control signal to control the light source to emit light;
transmitting a second control signal to selectively adjust a scanning angle of a scanning mirror that scans the light emitted from the light source toward an object; and
generating a depth image of the object using detected light reflected from the object.

15. A non-transitory computer readable recording medium having recorded thereon a program executable by a computer for performing the method of claim 14.
